# EUROPEAN PATENT APPLICATION

(11) **EP 1 742 421 A1**
(43) Date of publication of application: **10.01.2007**
(21) Application number: 05730658.1
(22) Date of filing: 15.04.2005
(51) Int. Cl.: H04L 12/28

(54) **RADIO COMMUNICATION DEVICE AND RADIO COMMUNICATION METHOD**

(30) Priority: 16.04.2004 JP 2004121147
(71) Applicant: MATSUSHITA ELECTRIC INDUSTRIAL CO., LTD., Osaka 571-8501 (JP)
(72) Inventor: ASAKURA, Jun., c/o Matsushita El.Ind.Co.Ltd, Osaka 540-6319 (JP)
(74) Representative: Grünecker, Kinkeldey, Stockmair & Schwanhäusser Anwaltssozietät
(86) International application number: PCT/JP2005/007337
(87) International publication number: WO 2005/101746

(57) **Abstract**

A wireless communication device and a wireless communication method are provided that enable a reliable short-range wireless communication with a wanted wireless communication terminal without requiring a user to determine whether to permit a connection. The control units 30a and 30b of the wireless communication terminals 1a and 1b transmit the short-range wireless communication addresses thereof, respectively, while the infrared communication path being established (step S108, step S111) and the wireless communication terminals 1a and 1b receive the corresponding short-range wireless communication addresses (step S110, step S113). When the short-range wireless communication device 1a designates the short-range wireless communication address of the wireless communication terminal 1b to send a wireless communication connection request thereto (step S120), the control unit 30b of the wireless communication terminal 1b determines whether to grant the connection request by comparing the short-range wireless communication address acquired in step S110 with that of the requesting terminal.

## Description

### Technical Field

The present invention relates to a wireless communication device and a wireless communication method that enable a short range communication.

### Background Art

Recently, a technique to allow a direct communication between two different information terminals having wireless communication function has been developed. The terminal device (herein, referred to as a wireless communication terminal) having wireless communication function is connected to another wireless communication terminal through a wireless communication instead of using a cable having a connector. Therefore, in the wireless communication terminal, the need for a communication cable is removed so that the communication between the terminals becomes simplified.

However, in the wireless communication terminal, a radio wave is transmitted on all sides so that any arbitrary terminal located within reach of the radio wave may be connected through the wireless communication. Therefore, there exists a need for the wireless terminal to designate and identify a target terminal to commence the communication thereto.

For example, a Bluetooth^{™} compliant wireless communication device is suggested to provide wireless connectivity. Bluetooth^{™} is a simplified communication technique that allows one-to-many connectivity.

In the above communication method, one wireless communication terminal in a group of multiple wireless communication terminals is granted a control function. The wireless communication terminal granted the control function is referred to as a master, and the other terminals are referred to as a slave.

In addition, in order to establish a communicative connection between two wireless communication devices, the following four steps are required.

(1) The master terminal performs an inquiry manipulation to search a surrounding Bluetooth device.

(2) As a slave terminal is searched by the inquiry manipulation of the master, the slave terminal performs an inquiry scan operation, and transmits Bluetooth address (FHS packet) thereof upon reception of a request from the master.

(3) The master selects a wanted terminal to be connected from a list of terminals searched by the inquiry manipulation and sends a request (page) for connection to the selected terminal. If a power class in the Bluetooth^{™} equals to 3, a terminal that performs the inquiry scanning, being located outside the radius of 10 meters, is also included in the list additionally to the wanted terminal.

(4) The salve terminal performs a page scan, and when receiving the request for connection during page scanning, the slave terminal determines whether to grant the connection to the requesting terminal.

For instance, one of the communication methods for short-range wireless communication described above is described in Patent Document 1. In the communication method, a wireless communication terminal A directly acquires, by using directional wireless communication unit, a short-range wireless communication ID of a wireless communication terminal B to which the terminal A wants to connect through a wireless communication. Using the short-range wireless communication ID of a wireless communication terminal B, the wireless communication terminal A may connect to the designated wireless communication terminal B.

In addition, by acquiring the short-range wireless communication ID of the wireless communication terminal B through the directional wireless communication, the wireless communication terminal A may designate and connect a target terminal irrespective of how many short-range wireless communication terminals being located nearby.

However, in a conventional wireless communication terminal and wireless communication method, it is established that, as a wireless communication request signal is received by the wireless communication terminal B from the wireless communication terminal A using the wireless communication ID of the wireless communication terminal B, a wireless transmission path between the terminals A and B is set up according to a wireless connection response command of the wireless communication terminal B. Therefore, when the wireless communication terminal B receives the wireless communication request signal from a terminal other than the wireless communication terminal A, false connection may occur. To avoid such false connection, a user should transmit a grant of connection to the wireless communication terminal that requested a connection thereto.

In addition, in case of a communication system that needs authentication in order to prevent false connection and tapping, identification information such as authentication code of each terminal needs to be provided.

### Disclosure of the Invention

The present invention provides a wireless communication device and a wireless communication method where a reliable short-range wireless communication with a wanted wireless communication terminal is achieved without requiring a user of the wireless communication device to determine whether to generate connection grant.

The present invention also provides a wireless communication device and a wireless communication method where the need for identification information for use with authentication to be inputted is removed.

The present invention provides a wireless communication device, comprising:
a directional wireless communication unit that performs a directional wireless communication with the other wireless communication device;
a short-range wireless communication unit that performs a short-range wireless communication with the other wireless communication device based on a communication identification information for the short-range wireless communication; and
a control unit that controls the directional wireless communication unit and the short-range wireless communication unit,
wherein the control unit includes:
a portion that establishes a directional wireless communication path to the other wireless communication device;
a portion that transmits the communication identification information to the other wireless communication device through the directional wireless communication path;
a portion that stores the communication identification information of the other wireless communication device when receiving the communication identification information of the other wireless communication device from the other wireless communication device; and
a portion that determines whether to permit a connection request for the short-range wireless communication, when receiving the connection request for the short-range wireless communication, based on comparison between the communication identification information of a wireless communication device which sends the connection request for the short-range wireless communication and the stored communication identification information.

According to the present invention, a wireless communication device that enables a reliable short-range wireless communication with a wanted wireless communication terminal without requiring a user to determine whether to grant a connection is provided.

In addition, the control unit includes:
a portion that stores authentication information when receiving the authentication information for the short-range wireless communication from the other wireless communication unit through the directional wireless communication path; and
a portion that performs authentication for the short-range wireless communication based on the authentication information.

According to the present invention, a wireless communication device is provided in which the need for the input of identification information for authentication purpose is removed.

In addition, the control unit further includes:
a portion that produces authentication information for performing the short-range wireless communication with the other wireless communication device;
a portion that transmits the authentication information for performing the short-range wireless communication to the other wireless communication device through the directional wireless communication path; and
a portion that performs authentication for the short-range wireless communication based on the authentication information.

According to the present invention, a wireless communication device is provided in which the need for the input of identification information for authentication purpose is removed.

In addition, while performing the authentication, the authentication information of respective wireless communication devices are required to be the same.

For example, the PIN code corresponding to the Bluetooth^{™}, or an extended service set identification (ESS-ID) corresponding to the wireless LAN may be used for authentication information.

Preferably, the communication identification information is assigned uniquely to the short-range wireless communication unit.

According to the present invention, as the communication identification information is uniquely assigned to the short-range wireless communication unit, a wanted communication partner may be properly designated.

The present invention also provides comprising:
a directional wireless communication unit that performs a directional wireless communication with the other wireless communication device;
a short-range wireless communication unit that performs a short-range wireless communication with the other wireless communication device based on a communication identification information for the short-range wireless communication; and
a control unit that controls the directional wireless communication unit and the short-range wireless communication unit,
wherein the control unit includes:
a portion that establishes a directional wireless communication path to the other wireless communication device;
a portion that stores authentication information when receiving the authentication information for the short-range wireless communication from the second wireless communication unit through the directional wireless communication path;
a portion that establishes a short-range wireless communication path to the other wireless communication device; and
a portion that performs authentication for the short-range wireless communication based on the authentication information.

According to the present invention, a wireless communication device is provided in which the need for the input of identification information for authentication purpose is removed.

The control unit further includes:
a portion that produces authentication information for performing authentication in the short-range wireless communication with the other wireless communication device;
a portion that transmits the authentication information to the other wireless communication device through the directional wireless communication path; and
a portion that performs authentication for the short-range wireless communication based on the authentication information.

According to the present invention, a wireless communication device is provided in which the need for the input of identification information for authentication purpose is removed.

The present invention further provides a wireless communication device, comprising:
a directional wireless communication unit that performs a directional wireless communication with the other wireless communication device;
a short-range wireless communication unit that performs a short-range wireless communication with the other wireless communication device based on a short-range communication identification information; and
a control unit that controls the directional wireless communication unit and the short-range wireless communication unit,
wherein the control unit includes:
a portion that establishes a directional wireless communication path to the other wireless communication device;
a portion that produces authentication information for performing authentication in the short-range wireless communication with the other wireless communication device;
a portion that transmits the authentication information to the other wireless communication device through the directional wireless communication path;
a portion that establishes a short-range wireless communication path to the other wireless communication device; and
a portion that performs authentication for the short-range wireless communication based on the authentication information.

According to the present invention, a wireless communication device is provided in which the need for the input of identification information for authentication purpose is removed.

In addition, while performing the authentication, the authentication information of respective wireless communication devices are required to be the same.

For example, the PIN code corresponding to the Bluetooth^{™}, or an extended service set identification (ESS-ID) corresponding to the wireless LAN may be used for authentication information.

In addition, preferably, the short-range wireless communication is Bluetooth(TM) or a wireless Local Area Network which enables communication within a predetermined range.

Thus, the short-range wireless communication such as Bluetooth^{™} or a wireless LAN may be used.

In addition, the directional wireless communication is implemented as one of an infrared communication, a visible light communication and a non-contact communication to provide one-to-one communication.

Thus, through one-to-one communication, the communication with a wanted terminal and transmitting/receiving the short-range identification information or authentication information may be achieved with improved security and reliability.

The present invention further provides a wireless communication method, comprising:
receiving authentication information for the short-range wireless communication from the other wireless communication device through the directional wireless communication path;
storing the authentication information;
establishing a communication path for the short-range wireless communication to the other wireless communication device when the connection request for the short-range wireless communication is permitted; and
performing authentication for the short-range wireless communication through the communication path based on the authentication information.

According to the present invention, a wireless communication method in which a short-range communication with a wanted terminal is achieved with improved security without the need for a user of a wireless communication device to determine of granting connection.

The wireless communication method further comprises,
receiving authentication information for the short-range wireless communication from the other wireless communication device through the directional wireless communication path;
storing the authentication information;
establishing a communication path for the short-range wireless communication to the other wireless communication device when the connection request for the short-range wireless communication is permitted; and
performing authentication for the short-range wireless communication through the communication path based on the authentication information.

According to the present invention, a wireless communication method is provided in which the need for the input of identification information for authentication purpose is removed.

In addition, the wireless communication method further comprises,
producing authentication information for performing the short-range wireless communication with the other wireless communication device;
transmitting the authentication information for the short-range wireless communication to the other wireless communication device through the directional wireless communication path; and
performing authentication for the short-range wireless communication based on the authentication information.

According to the present invention, a wireless communication method is provided in which the need for the input of identification information for authentication purpose is removed.

In addition, while performing the authentication, the authentication information of respective wireless communication devices are required to be the same.

For example, the PIN code corresponding to the Bluetooth^{™}, or an extended service set identification (ESS-ID) corresponding to the wireless LAN may be used for authentication information.

Preferably, the communication identification information is assigned uniquely to the short-range wireless communication unit.

According to the method, as the communication identification information is uniquely assigned to the short-range wireless communication unit, a wanted communication partner may be properly designated.

The present invention still further provides a wireless communication method comprising:
establishing a directional wireless communication path for performing a directional wireless communication with the other wireless communication device;
receiving authentication information for a short-range communication from the other wireless communication device through the directional wireless communication path;
storing the authentication information;
establishing a short-range communication path to the other wireless communication device; and
performing authentication for the short-range wireless communication through the short-range communication path based on the authentication information.

According to the present invention, a wireless communication method is provided in which the need for the input of identification information for authentication purpose is removed.

In addition, the method further comprising:
producing authentication information for performing authentication in the short-range wireless communication with the other wireless communication device; and
transmitting the authentication information to the other wireless communication device through the directional wireless communication path.

According to the present invention, a wireless communication method is provided in which the need for the input of identification information for authentication purpose is removed.

The present invention still further provides a wireless communication method, comprising:
establishing a directional wireless communication path to a second wireless communication device;
producing authentication information for performing authentication in a short-range wireless communication with the other wireless communication device;
transmitting the authentication information to the other wireless communication device through the directional wireless communication path;
establishing a short-range communication path to the other wireless communication device; and
performing authentication for the short-range wireless communication through the short-range communication path based on the authentication information.

According to the present invention, a wireless communication method is provided in which the need for the input of identification information for authentication purpose is removed.

In addition, while performing the authentication, the authentication information of respective wireless communication devices are required to be the same.

For example, the PIN code corresponding to the Bluetooth^{™}, or an extended service set identification (ESS-ID) corresponding to the wireless LAN may be used for authentication information.

In addition, for example, the short-range wireless communication is Bluetooth(TM) or a wireless Local Area Network which enables communication within a predetermined range.

Thus, the short-range wireless communication such as Bluetooth^{™} or a wireless LAN may be used.

In addition, the directional wireless communication is implemented as one of an infrared communication, a visible light communication and a non-contact communication to provide one-to-one communication.

Thus, through one-to-one communication, the communication with a wanted terminal and transmitting/receiving the short-range identification information or authentication information may be achieved with improved security and reliability.

According to the present invention, a wireless communication device and a wireless communication method are provided that enable a reliable short-range wireless communication with a wanted wireless communication terminal without requiring a user of the wireless communication device to determine whether to grant a connection. In addition, a wireless communication device and a wireless communication method are also provided that the need for identification information for use with authentication to be inputted is removed.

### Brief Description of the Drawings

FIG. 1 illustrates an example sequence of establishing a short-range wireless communication connection path in a wireless communication method according to an example embodiment of the present invention.
FIG. 2 illustrates an example sequence of an authentication procedure in a wireless communication method according to an example embodiment of the present invention.
FIG. 3 illustrates a wireless communication terminal device according to an example embodiment of the present invention.

### Description of Reference Numerals and Signs

- 1: Wireless communication terminal
- 10: Infrared communication unit
- 20: Short-range wireless communication unit
- 30: Control unit
- 31: Infrared communication path establishing unit
- 32: Short-range wireless communication address receiving/transmitting unit
- 33: PIN code receiving/transmitting unit
- 34: Memory holding unit
- 35: Wireless communication connection requesting unit
- 36: Connection grant determination unit
- 37: Authentication unit
- 38: Automatic PIN code producing unit

### Best Mode for Carrying Out the Invention

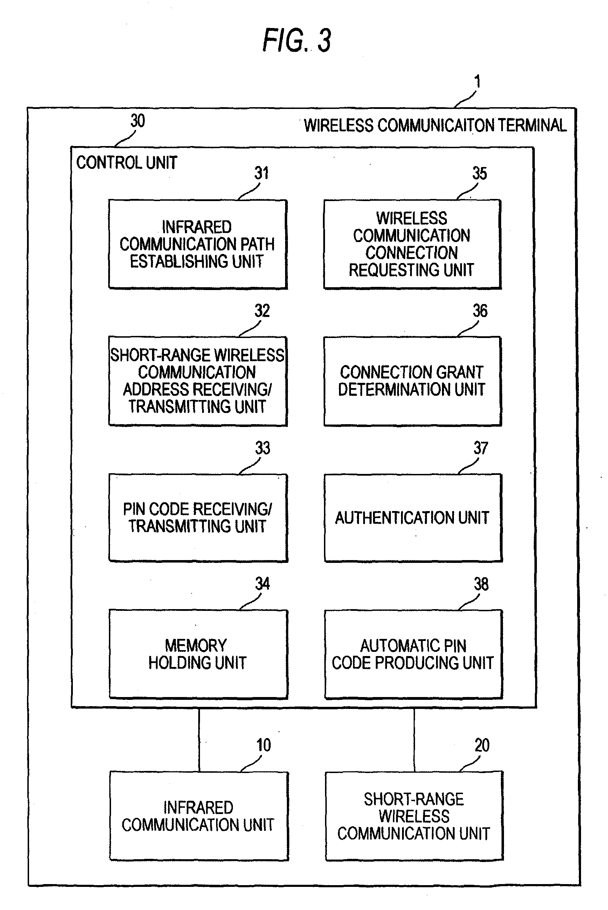

FIG. 3 illustrates a wireless communication terminal device according to an example embodiment of the present invention. The wireless communication terminal may include a variety of wireless communication devices such as a mobile phone, a personal digital assistant (PDA) having communication function, and a personal computer. In FIG. 3, only relevant portions are schematically illustrated.

In the example embodiment herein, for the purpose of this discussion, Bluetooth^{™} is used as a protocol for the short-range wireless communication.

As illustrated in FIG. 3, a wireless communication terminal 1 according to the example embodiment of the present invention includes an infrared communication unit 10, a short-range wireless communication unit 20 and a control unit 13 for controlling the infrared communication unit 10 and the short-range wireless communication unit 20.

The control unit 13 includes infrared communication path establishing unit 31, which is used widely in an infrared communication, and short-range wireless communication address receiving/transmitting unit 32 for receiving and transmitting a short-range wireless communication address, namely, a short-range wireless communication ID, via the infrared communication path. Also, the control unit 13 includes PIN code receiving/transmitting unit 33, wherein a PIN code is used as example authentication information. The control unit 13 further includes a memory holding unit 34 for storing the received wireless communication address and the PIN code.

In addition, the control unit 13 further includes wireless communication connection requesting unit 35 that directly designates a wanted wireless communication terminal to send a connection request thereto by using a short-range wireless communication address, which is used widely in a short-range wireless communication and acquired by the short-range wireless communication address receiving/transmitting unit 32. The control unit 13 further includes connection grant determination unit 36 that determines whether to generate a connection grant based on comparison between the short-range wireless communication address acquired through the infrared communication with the designated terminal receiving the connection request and the short-range wireless communication address of the terminal transmitting the request for connection. The control unit 13 further includes authentication unit 37 for performing authentication, and automatic PIN code producing unit 38 that automatically and randomly produces the PIN code, the authentication code.

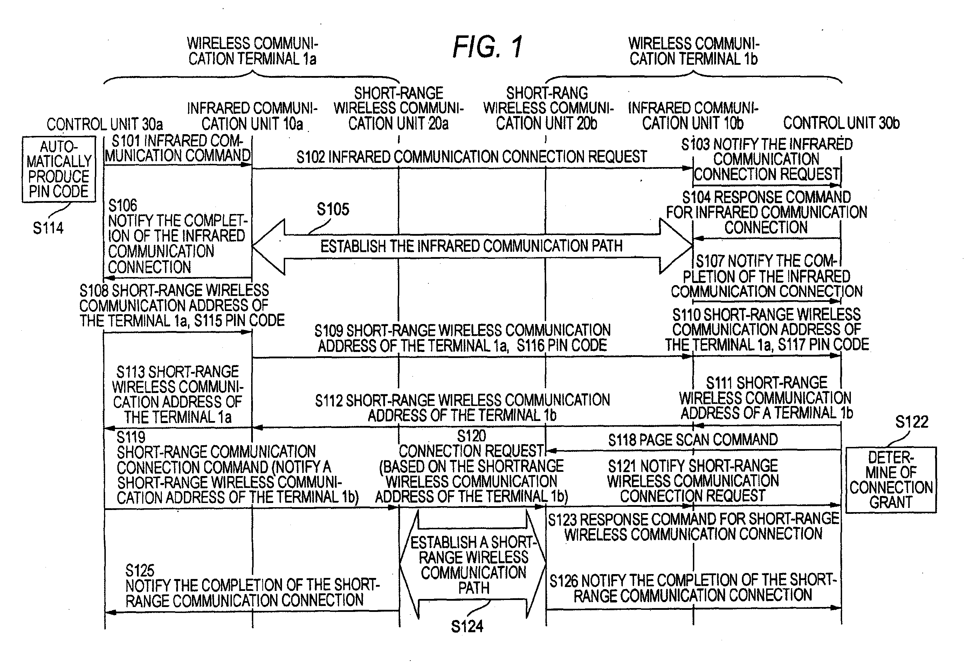

FIG. 1 illustrates an example sequence of establishing a short-range wireless communication connection path in a wireless communication method according to an example embodiment of the present invention. Herein, it is described that a wireless communication terminal 1a and a wireless communication terminal 1b are connected via a short-range wireless communication. Also, the wireless communication terminal 1a and the wireless communication terminal 1b have a structure substantially the same as in the wireless communication terminal 1 illustrated in FIG. 3. In addition, elements of the wireless communication terminal 1a and the wireless communication terminal 1b are represented by a reference number followed by letters 'a' and 'b', respectively, to denote the same element of the wireless communication terminal in FIG. 3 represented by the same reference number alone.

To achieve the short-range wireless communication, it is needed to acquire the short-range wireless communication address uniquely assigned to each terminal. In the wireless communication method according to the example embodiment, the short-range wireless communication address is acquired through the infrared communication.

First, since the infrared communication is a directional communication, the infrared communication units 10a of respective wireless communication terminals need to face each other to have connectivity in the infrared communication. However, by implementing the directional communication, a communication to a wanted wireless communication terminal may be achieved without the risk of connecting any one of unwanted wireless communication terminals that are located within communication range of the short-range wireless communication.

To establish the infrared communication path, the control unit 30a of the wireless communication terminal 1a sends an infrared communication command to the infrared communication unit 10a (step S101). The infrared communication unit 10a sends an infrared communication connection request to the infrared communication unit 10b of the wireless communication terminal 1b (step S102), and the infrared communication unit 10b transmits an infrared communication connection request to the control unit 30b (step S103).

The control unit 30b transmits a response command for infrared communication connection to the infrared communication unit 10b (step S104), and performs a procedure of establishing the infrared communication path between the infrared communication unit 10a and the infrared communication unit 10b (step S105). When the infrared communication path is established, the infrared communication unit 10a and the infrared communication unit 10b notify the control unit 30a and the control unit 30b, respectively, of the completion of connection in the infrared communication.

Next, with the infrared communication path established, the control unit 30a notifies the infrared communication unit 10a of the short-range wireless communication address of the wireless communication terminal 1a (step S108), and the infrared communication unit 10a transmits the short-range wireless communication address of the wireless communication terminal 1a to the infrared communication unit 10b (step S109). The infrared communication unit 10b transmits the received short-range wireless communication address to the control unit 30b (step S110). The memory holding unit 34b of the control unit 30b stores the short-range wireless communication address of the wireless communication terminal 1a that is another party being communicated with.

Also, the control unit 30b notifies the infrared communication unit 10b of the short-range wireless communication address uniquely assigned to the wireless communication terminal 1b (step S111), and the infrared communication unit 10b transmits the short-range wireless communication address of the wireless communication terminal 1b to the infrared communication unit 10a (step S112). The infrared communication unit 10a transmits the received the short-range wireless communication address to the control unit 30a (step S113). The memory holding unit 34a of the control unit 30a stores the short-range wireless communication address of the wireless communication terminal 1 b that is another party being communicated with.

Also, with the infrared communication path established, the automatic PIN code producing unit 38a of the control unit 30a automatically produces a PIN code (step S114). And, the PIN code receiving/transmitting unit 33 of the control unit 30a notifies the infrared communication unit 10a of the PIN code automatically produced (step S115), and the infrared communication unit 10a transmits the PIN code to the infrared communication unit 10b (step S116). The infrared communication unit 10b transmits the received PIN code to the control unit 30b (step S117). The memory holding unit 34b of the control unit 30b stores the PIN code.

Herein, the PIN code is authentication information for performing authentication procedure in a short-range wireless communication. And, when performing authentication on the wireless communication terminal 1a and the wireless communication terminal 1b, the PIN code needs to be inputted to both the wireless communication terminals 1a and 1b. For instance, the authentication is concluded if the two PIN codes of the wireless communication terminal 1a and the wireless communication terminal 1b are matched to each other.

In the example embodiment, the PIN code is not inputted by the user but is produced automatically by the automatic PIN code producing unit 38. Therefore, since each user of the wireless communication terminal to be authenticated does not need to input the PIN code, the authentication may be carried out with much ease. In addition, as the authentication is performed through a directional communication, the possibility that a terminal is communicated to a terminal other than a target terminal is lower so that the authentication is achieved with enhanced security and reliability.

In addition, as illustrated in FIG. 1, the wireless communication terminal 1a may transmit the short-range address and the PIN code simultaneously. In addition, it does not matter at which timing the PIN code is automatically produced in step S114 as long as the PIN code is produced before being transmitted.

Next, in order to establish the short-range wireless communication path, the control unit 30b of the wireless communication terminal 1 b transmits a short-range wireless communication scan command to the short-range wireless communication unit 20b, and performs a page scan operation (step S118). Meanwhile, the control unit 30a of the wireless communication terminal 1a transmits, by using the short-range wireless communication address of the wireless communication terminal 1b acquired through the infrared communication, a short-range communication connection command to the short-range wireless communication unit 20a (step S119). The short-range wireless communication unit 20a sends a connection request (page) to the control unit 20b of the wireless communication terminal 1 b (step S120).

When the wireless communication terminal 1b, while performing the page scan operation, receives the connection request from the wireless communication terminal 1a in the step S120, the short-range wireless communication unit 20b transmits a short-range wireless communication connection request to the control unit 30b (step S121). The wireless communication terminal 1b of which control unit 30b received the connection request determines whether the requesting terminal is the terminal that has the infrared communication in steps S100 through 114 by comparing the short-range wireless communication address acquired in step S108 with the short-range wireless communication address of the requesting terminal. If the two short-range wireless communication addresses are equal to each other, the wireless communication terminal 1b determines to generate a connection grant (step S122). In addition, if the two short-range wireless communication addresses are equal to each other, connection to the wireless communication terminal 1a is granted.

The control unit 30b performs a response command for short-range wireless communication connection on the short-range wireless communication unit 20b according to the determination of granting connection in step S122 (step S123), and establishes a short-range wireless communication path between the short-range wireless communication unit 20a and the short-range wireless communication unit 20b. In addition, when the short-range wireless communication path is established, the short-range wireless communication unit 20a and the short-range wireless communication unit 20b respectively notify the control unit 30a and the control unit 30b the completion of the short-range wireless communication (steps S125 and S126).

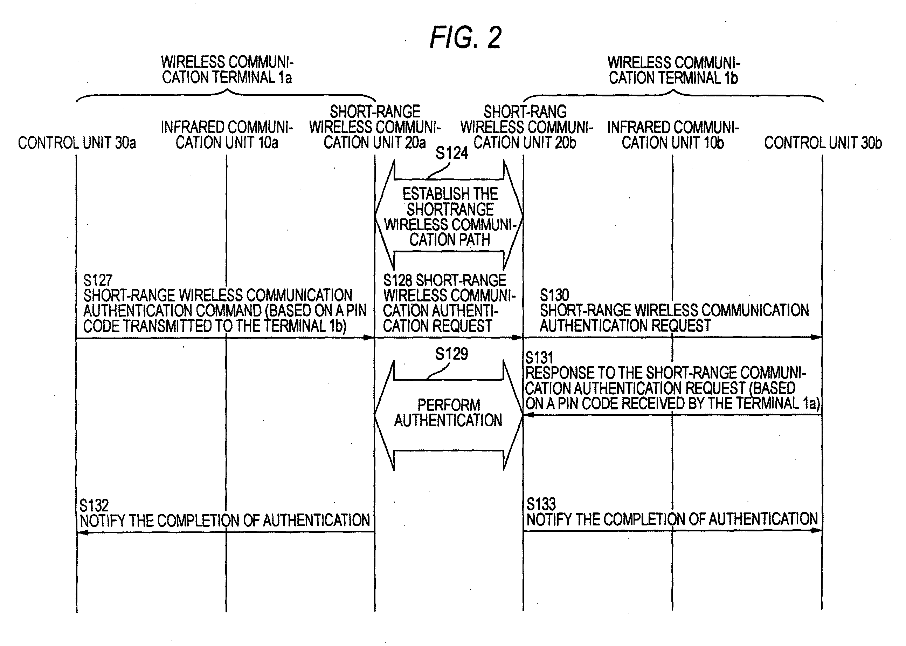

FIG. 2 illustrates a sequence of an authentication procedure in a wireless communication method according to an example embodiment of the present invention. As illustrated in FIG. 2, when the control unit 1a transmits a short-range wireless communication authentication command for the wireless communication terminal 1b to the short-range wireless communication unit 20a with the short-range wireless communication path established as indicated at step S124 (step S127), the wireless communication unit 20a of the wireless communication terminal 1a sends a short-range wireless communication authentication request to the short-range wireless communication unit 20b of the wireless communication terminal 1b (step S128). Accordingly, an authentication between the wireless communication terminal 1a and the wireless communication terminal 1b is performed (step S129). Herein, the control unit 30a performs the authentication command by using the PIN code produced in step S114.

When the short-range wireless communication unit 20b receives the short-range wireless communication authentication request, the short-range wireless communication unit 20b notifies the control unit of a short-range wireless communication authentication request (step S130). The authentication unit 37b of the control unit 30b transmits a response to the short-range communication authentication request to the short-range wireless communication unit 20b by comparing the received PIN code with the PIN code that is received by the control unit 30b in step S117 and stored in the memory holding unit 34b (step S131).

In this manner described above, the authentication procedure is performed. When the authentication is completed, the short-range wireless communication unit 20a and the short-range wireless communication unit 20b respectively notify the control unit 30a and the control unit 30b of the completion of authentication (steps S132 and 133).

According to the wireless communication device and the wireless communication method of the example embodiments of the present invention, upon receipt of the infrared communication command (step S100) from the user of a wireless communication terminal (and wherein the infrared communication unit of the wireless communication terminal is in a reception state), an authentication for short-range wireless communication may also be performed.

In the above example embodiments, the infrared communication between the wireless communication terminals 1a and 1b is described as an example directional wireless communication. However, other type of directional communications such as visible light communication, contactless IC may also be utilized. In addition, by using the directional wireless communication, a wanted terminal to be communicated may be easily designated by the user, and the risk that the communication contents are sent to and read by an unwanted person may be reduced. Therefore, the communication with a wanted terminal may be achieved with improved security and reliability.

In addition, in the above example embodiments, Bluetooth^{™} is described as an example short-range wireless communication method; however, any wireless communication methods that provide wireless connectivity within a particular range may alternatively be utilized. For example, a wireless LAN (IEEE802. 11) may also be utilized.

Herein, concerning the short-range wireless communication address, for example, Bluetooth address corresponding to the Bluetooth^{™} or MAC address corresponding to the wireless LAN may be used. In addition, concerning the authentication code, for example, the PIN code corresponding to the Bluetooth^{™}, or an extended service set identification (ESS-ID) corresponding to the wireless LAN may be used.

### Industrial Applicability

According to the present invention, a reliable connection to a wanted wireless communication terminal in a short-range wireless communication may be provided without a process for a user of the wireless communication terminal to determine of granting connection thereto. The present invention is suitable for a wireless communication device such as a mobile phone or an information terminal having communication function and the wireless communication method thereof. Furthermore, according to the present invention, the need for identification information to be inputted for authentication purpose is removed, and is suitable for a wireless communication device such as a mobile phone or information terminals having wireless communication and the wireless communication method thereof.

## Claims

1. A wireless communication device, comprising:
a directional wireless communication unit that performs a directional wireless communication with the other wireless communication device;
a short-range wireless communication unit that performs a short-range wireless communication with the other wireless communication device based on a communication identification information for the short-range wireless communication; and
a control unit that controls the directional wireless communication unit and the short-range wireless communication unit,
wherein the control unit includes:
a portion that establishes a directional wireless communication path to the other wireless communication device;
a portion that transmits the communication identification information to the other wireless communication device through the directional wireless communication path;
a portion that stores the communication identification information of the other wireless communication device when receiving the communication identification information of the other wireless communication device from the other wireless communication device; and
a portion that determines whether to permit a connection request for the short-range wireless communication, when receiving the connection request for the short-range wireless communication, based on comparison between the communication identification information of a wireless communication device which sends the connection request for the short-range wireless communication and the stored communication identification information.

2. The wireless communication device according to claim 1, wherein the control unit includes:
a portion that stores authentication information when receiving the authentication information for the short-range wireless communication from the other wireless communication unit through the directional wireless communication path; and
a portion that performs authentication for the short-range wireless communication based on the authentication information.

3. The wireless communication device according to claim 1 or 2, wherein the control unit includes:
a portion that produces authentication information for performing the short-range wireless communication with the other wireless communication device;
a portion that transmits the authentication information for performing the short-range wireless communication to the other wireless communication device through the directional wireless communication path; and
a portion that performs authentication for the short-range wireless communication based on the authentication information.

4. The wireless communication device according to claim 2 or 3, wherein while performing the authentication, the authentication information of respective wireless communication devices are required to be the same.

5. The wireless communication device according to any one of claims 1 to 4, wherein the communication identification information is assigned uniquely to the short-range wireless communication unit.

6. A wireless communication device, comprising:
a directional wireless communication unit that performs a directional wireless communication with the other wireless communication device;
a short-range wireless communication unit that performs a short-range wireless communication with the other wireless communication device based on a communication identification information for the short-range wireless communication; and
a control unit that controls the directional wireless communication unit and the short-range wireless communication unit,
wherein the control unit includes:
a portion that establishes a directional wireless communication path to the other wireless communication device;
a portion that stores authentication information when receiving the authentication information for the short-range wireless communication from the second wireless communication unit through the directional wireless communication path;
a portion that establishes a short-range wireless communication path to the other wireless communication device; and
a portion that performs authentication for the short-range wireless communication based on the authentication information.

7. The wireless communication device according to claim 6, wherein the control unit includes:
a portion that produces authentication information for performing authentication in the short-range wireless communication with the other wireless communication device;
a portion that transmits the authentication information to the other wireless communication device through the directional wireless communication path; and
a portion that performs authentication for the short-range wireless communication based on the authentication information.

8. A wireless communication device, comprising:
a directional wireless communication unit that performs a directional wireless communication with the other wireless communication device;
a short-range wireless communication unit that performs a short-range wireless communication with the other wireless communication device based on a short-range communication identification information; and
a control unit that controls the directional wireless communication unit and the short-range wireless communication unit,
wherein the control unit includes:
a portion that establishes a directional wireless communication path to the other wireless communication device;
a portion that produces authentication information for performing authentication in the short-range wireless communication with the other wireless communication device;
a portion that transmits the authentication information to the other wireless communication device through the directional wireless communication path;
a portion that establishes a short-range wireless communication path to the other wireless communication device; and
a portion that performs authentication for the short-range wireless communication based on the authentication information.

9. The wireless communication device according to any one of claims 6 to 8, wherein while performing the authentication, the authentication information of respective wireless communication devices are required to be the same.

10. The wireless communication device according to any one of claims 1 to 9, wherein the short-range wireless communication is Bluetooth(TM) or a wireless Local Area Network which enables communication within a predetermined range.

11. The wireless communication device according to any one of claims 1 to 10, wherein the directional wireless communication is implemented as one of an infrared communication, a visible light communication and a non-contact communication to provide one-to-one communication.

12. A wireless communication method, comprising:
establishing a directional wireless communication path for performing directional wireless communication with the other wireless communication device;
transmitting communication identification information for a short-range communication to the other wireless communication device through the directional wireless communication path;
receiving, from the other wireless communication device, the communication identification information thereof;
storing the received communication identification information of the other wireless communication device; and
determining whether to permit a connection request for the short-range wireless communication when receiving the connection request for the short-range wireless communication based on comparison between the communication identification information of a wireless communication device which sends the connection request for the short-range wireless communication and the stored communication identification information.

13. The wireless communication method according to claim 12, further comprising,
receiving authentication information for the short-range wireless communication from the other wireless communication device through the directional wireless communication path;
storing the authentication information;
establishing a communication path for the short-range wireless communication to the other wireless communication device when the connection request for the short-range wireless communication is permitted; and
performing authentication for the short-range wireless communication through the communication path based on the authentication information.

14. The wireless communication method according to claim 12 or 13, further comprising:
producing authentication information for performing the short-range wireless communication with the other wireless communication device;
transmitting the authentication information for the short-range wireless communication to the other wireless communication device through the directional wireless communication path; and
performing authentication for the short-range wireless communication based on the authentication information.

15. The wireless communication method according to claim 13 or 14, wherein while performing the authentication, the authentication information of respective wireless communication devices are required to be the same.

16. The wireless communication method according to any one of claims 12 to 15, wherein the communication identification information is assigned uniquely to the short-range wireless communication unit.

17. A wireless communication method, comprising:
establishing a directional wireless communication path for performing a directional wireless communication with the other wireless communication device;
receiving authentication information for a short-range communication from the other wireless communication device through the directional wireless communication path;
storing the authentication information;
establishing a short-range communication path to the other wireless communication device; and
performing authentication for the short-range wireless communication through the short-range communication path based on the authentication information.

18. The wireless communication method according to claim 17, further comprising:
producing authentication information for performing authentication in the short-range wireless communication with the other wireless communication device; and
transmitting the authentication information to the other wireless communication device through the directional wireless communication path.

19. A wireless communication method, comprising:
establishing a directional wireless communication path to a second wireless communication device;
producing authentication information for performing authentication in a short-range wireless communication with the other wireless communication device;
transmitting the authentication information to the other wireless communication device through the directional wireless communication path;
establishing a short-range communication path to the other wireless communication device; and
performing authentication for the short-range wireless communication through the short-range communication path based on the authentication information.

20. The wireless communication method according to any one of claims 17 to 19, wherein while performing the authentication, the authentication information of respective wireless communication devices are required to be the same.

21. The wireless communication method according to any one of claims 12 to 20, wherein the short-range wireless communication is Bluetooth(TM) or a wireless Local Area Network which enables communication within a predetermined range.

22. The wireless communication method according to any one of claims 12 to 21, wherein the directional wireless communication is implemented as one of an infrared communication, a visible light communication and a non-contact communication to provide one-to-one communication.

## Amended claims

### Amended claims under Art. 19.1 PCT

**1.** A wireless communication device, comprising:
a directional wireless communication unit that performs a directional wireless communication with the other wireless communication device;
a short-range wireless communication unit that performs a short-range wireless communication with the other wireless communication device based on a communication identification information for the short-range wireless communication; and
a control unit that controls the directional wireless communication unit and the short-range wireless communication unit,
wherein the control unit includes:
a portion that establishes a directional wireless communication path to the other wireless communication device;
a portion that transmits the communication identification information to the other wireless communication device through the directional wireless communication path;
a portion that stores the communication identification information of the other wireless communication device when receiving the communication identification information of the other wireless communication device from the other wireless communication device; and
a portion that determines whether to permit a connection request for the short-range wireless communication, when receiving the connection request for the short-range wireless communication, based on comparison between the communication identification information of a wireless communication device which sends the connection request for the short-range wireless communication and the stored communication identification information.

**2.** The wireless communication device according to claim 1, wherein the control unit includes:
a portion that stores authentication information when receiving the authentication information for the short-range wireless communication from the other wireless communication unit through the directional wireless communication path; and
a portion that performs authentication for the short-range wireless communication based on the authentication information.

**3.** The wireless communication device according to claim 1 or 2, wherein the control unit includes:
a portion that produces authentication information for performing the short-range wireless communication with the other wireless communication device;
a portion that transmits the authentication information for performing the short-range wireless communication to the other wireless communication device through the directional wireless communication path; and
a portion that performs authentication for the short-range wireless communication based on the authentication information.

**4.** The wireless communication device according to claim 2 or 3, wherein while performing the authentication, the authentication information of respective wireless communication devices are required to be the same.

**5.** The wireless communication device according to any one of claims 1 to 4, wherein the communication identification information is assigned uniquely to the short-range wireless communication unit.

**6.** A wireless communication device, comprising:
a directional wireless communication unit that performs a directional wireless communication with the other wireless communication device;
a short-range wireless communication unit that performs a short-range wireless communication with the other wireless communication device based on a communication identification information for the short-range wireless communication; and
a control unit that controls the directional wireless communication unit and the short-range wireless communication unit,
wherein the control unit includes:
a portion that establishes a directional wireless communication path to the other wireless communication device;
a portion that stores authentication information when receiving the authentication information for the short-range wireless communication from the second wireless communication unit through the directional wireless communication path;
a portion that establishes a short-range wireless communication path to the other wireless communication device; and
a portion that performs authentication for the short-range wireless communication based on the authentication information.

**7.** The wireless communication device according to claim 6, wherein the control unit includes:
a portion that produces authentication information for performing authentication in the short-range wireless communication with the other wireless communication device;
a portion that transmits the authentication information to the other wireless communication device through the directional wireless communication path; and
a portion that performs authentication for the short-range wireless communication based on the authentication information.

**8.** A wireless communication device, comprising:
a directional wireless communication unit that performs a directional wireless communication with the other wireless communication device;
a short-range wireless communication unit that performs a short-range wireless communication with the other wireless communication device based on a short-range communication identification information; and
a control unit that controls the directional wireless communication unit and the short-range wireless communication unit,
wherein the control unit includes:
a portion that establishes a directional wireless communication path to the other wireless communication device;
a portion that produces authentication information for performing authentication in the short-range wireless communication with the other wireless communication device;
a portion that transmits the authentication information to the other wireless communication device through the directional wireless communication path;
a portion that establishes a short-range wireless communication path to the other wireless communication device; and
a portion that performs authentication for the short-range wireless communication based on the authentication information.

**9.** The wireless communication device according to any one of claims 6 to 8, wherein while performing the authentication, the authentication information of respective wireless communication devices are required to be the same.

**10.** The wireless communication device according to any one of claims 1 to 9, wherein the short-range wireless communication is Bluetooth(TM) or a wireless Local Area Network which enables communication within a predetermined range.

**11.** The wireless communication device according to any one of claims 1 to 10, wherein the directional wireless communication is implemented as one of an infrared communication, a visible light communication and a non-contact communication to provide one-to-one communication.

**12.** A wireless communication method, comprising:
establishing a directional wireless communication path for performing directional wireless communication with the other wireless communication device;
transmitting communication identification information for a short-range communication to the other wireless communication device through the directional wireless communication path;
receiving, from the other wireless communication device, the communication identification information thereof;
storing the received communication identification information of the other wireless communication device; and
determining whether to permit a connection request for the short-range wireless communication when receiving the connection request for the short-range wireless communication based on comparison between the communication identification information of a wireless communication device which sends the connection request for the short-range wireless communication and the stored communication identification information.

**13.** The wireless communication method according to claim 12, further comprising,
receiving authentication information for the short-range wireless communication from the other wireless communication device through the directional wireless communication path;
storing the authentication information;
establishing a communication path for the short-range wireless communication to the other wireless communication device when the connection request for the short-range wireless communication is permitted; and
performing authentication for the short-range wireless communication through the communication path based on the authentication information.

**14.** The wireless communication method according to claim 12 or 13, further comprising:
producing authentication information for performing the short-range wireless communication with the other wireless communication device;
transmitting the authentication information for the short-range wireless communication to the other wireless communication device through the directional wireless communication path; and
performing authentication for the short-range wireless communication based on the authentication information.

**15.** The wireless communication method according to claim 13 or 14, wherein while performing the authentication, the authentication information of respective wireless communication devices are required to be the same.

**16.** The wireless communication method according to any one of claims 12 to 15, wherein the communication identification information is assigned uniquely to the short-range wireless communication unit.

**17.** A wireless communication method, comprising:
establishing a directional wireless communication path for performing a directional wireless communication with the other wireless communication device;
receiving authentication information for a short-range communication from the other wireless communication device through the directional wireless communication path;
storing the authentication information;
establishing a short-range communication path to the other wireless communication device; and
performing authentication for the short-range wireless communication through the short-range communication path based on the authentication information.

**18.** (Deleted)

**19.** (Deleted)

**20.** (Deleted)

**21.** (Deleted)

**22.** (Deleted)
